# EUROPEAN PATENT APPLICATION

(11) **EP 2 040 405 A1**
(43) Date of publication of application: **25.03.2009**
(21) Application number: 07018398.3
(22) Date of filing: 19.09.2007
(51) Int. Cl.: H04J 14/02, H04Q 11/00

(54) **A data network and a method of data transmission**

(71) Applicant: Nokia Siemens Networks Oy, 02610 Espoo (FI)
(72) Inventor: Kuhn, Frank, 82229 Seefeld (DE)
(74) Representative: Bruglachner, Thomas E.

(57) **Abstract**

A data network and a method of distributing a plurality of data services provided by a plurality of Broadband Remote Access Servers to a plurality of access nodes each of which being connected to a plurality of subscriber lines. The network comprises a Wave Division Multiplex network ring or mesh wherein each service is transported on a uniquely assigned transmission wavelength such that connecting may be carried out on the lambda-layer without need of packet inspection.

## Description

### Background of the Invention

### Field of the Invention

The invention relates to a data network and a method for transmitting and receiving data. More specifically, the invention relates to a method of distributing a plurality of data services provided by a plurality of Broadband Remote Access Servers to a plurality of access nodes each of which being connected to a plurality of subscriber lines and to a network capable of doing so.

### Description of Related Art

Data services such as telephone, internet, Voice-over-IP, Video-conferencing and Video-on-demand (IPTV) are often distributed over a single network called aggregation network. As these services are made available to an increasing number of subscribers, a higher concentration of subscribers per access node (AN) is to be expected. At the same time, bandwidth per service increases because subscribers demand services of higher quality (i.e. faster internet access, High Definition TV etc.).

In a typical network layout for so-called multi-edge networks, services are injected into the network via dedicated Broadband Remote Access Servers (BRAS) or IP-Edge-Routers. For sake of simplicity, in the scope of this document the terms "Broadband Remote Access Server" and "BRAS" will be used solely but may also refer to IP-Edge-Routers. The services are then tunnelled over the aggregation-domain or aggregation-network through Aggregation Switches (AGS) by dedicated Virtual Local Area Network-(VLAN) or Multiprotocol Label Switching- (MPLS) tunnels. On the subscriber side, a plurality of subscribers located in the same area are connected to one of a plurality of access nodes. These access nodes communicate with the aggregation switch which receives the tunnelled data services from the aggregation-domain or aggregation-network.

This network topology has a disadvantage in that all data services need to pass the aggregation-domain or aggregation-network including routers and switches which infer a delay on the data. The aggregation-domain or aggregation-network also imposes a limit on the maximum data rate and therefore impedes provision of high-bandwidth services to a large number of subscribers.

### Summary of the Invention

The invention has been made in an effort to provide a method of distributing a plurality of data service (multiplay-services) provided by a plurality of Broadband Remote Access Servers to a plurality of access nodes each of which being connected to a plurality of subscriber lines and to a network capable of doing so.

Therefore, a first aspect of the invention provides a data network comprising a Wave Division Multiplex (WDM) network having a ring or a mesh structure, a plurality of Broadband Remote Access Servers (BRAS) and a plurality of Access Nodes (AN), each of which being connected to a corresponding plurality of subscriber lines. The WDM network comprises a first and a second plurality of Optical Add/Drop Multiplexers (OADM) and is adapted to transport data on a plurality of transmission wavelengths. The BRAS' are each connected to a corresponding one of the first plurality of OADMs via a corresponding one of a plurality of dedicated downlinks. The Access Nodes are each connected to a corresponding one of the second plurality of OADMs via a corresponding one of a plurality of dedicated uplinks. According to the invention each of the first plurality of OADMs is adapted to add data to the WDM network on a transmission wavelength uniquely assigned to the respective OADM. Thus, any service that is injected into the WDM network is assigned its own transmission wavelength inside the WDM network.

This has an advantage in that connection of a specific service provided by a BRAS to a specific Access Node over the WDM network may be carried out without inspection of packets in a data stream. All data entering the WDM network from the BRAS will be added by the OADM on a uniquely assigned transmission wavelength and therefore cannot interfere with transmission of other data services from other sources over the same WDM network. The OADM connected to the specific Access Node receives the uniquely assigned transmission wavelength and therefore all data of the data service by means of selective optical filtering and transmits the data stream to the Access Node. In this way, connecting can be carried out on the so-called lambda-layer keeping latencies to a minimum and drastically reducing circuit complexity because it is not required to demultiplex the whole data stream carried on the WDM network in order to detect packets of the specific data service addressed to the specific Access Node. Thus, packet-based routing, if required by the specific service, will only have to be carried out in the Access Node which cannot be avoided because more than one Access Node may be addressed by a single data service and only some of the subscribers connected to the specific Access Node. In the same way, the OADM connected to the receiving Access Node may add upstream traffic for the specific data service to the WDM network on the uniquely assigned transmission wavelength.

Preferably, a first OADM of the first plurality of OADMs is adapted to drop data from the WDM network on the transmission wavelength uniquely assigned to the first OADM. This is required if an upstream connection from an Access Node to the BRAS connected to the first OADM is desired. The first OADM receives the upstream data by means of selective optical filtering and transmits the upstream data to the BRAS.

In an embodiment of the network, each of the first plurality of OADMs may be adapted to drop data from the WDM network on the transmission wavelength uniquely assigned to the respective OADM.

In a preferred embodiment, the WDM network comprises two fibres wherein data is transported in opposing directions. This improves reliability of the network because any Access Node can be reached from each point on the WDM network via two routes and halves the maximum latency in the WDM network because data traffic may be connected to a specific Access Node via the shorter segment of the WDM network.

Preferably, Gigabit-Ethernet links are used for the dedicated downlinks and/or dedicated uplink.

A second aspect of the invention provides a method of distributing data services over a network. The method comprises:
providing a plurality of data services from a plurality of BRAS' to a plurality of Access Nodes, each BRAS being connected to a WDM network via a corresponding one of a plurality of dedicated downlinks and each Access Node being connected to the WDM network via a corresponding one of a plurality of dedicated uplinks and to a corresponding plurality of subscriber lines; and
adding each data service to the WDM network via a corresponding one of a first plurality of OADMs;
wherein each of the plurality of data services is uniquely assigned one of a plurality of transmission wavelengths of the WDM network.

Preferably, the method further comprises dropping one of the data services at one OADM of a second plurality of OADMs.

### Brief Description of the Drawings

A more complete appreciation of the present invention and many of the attendant advantages thereof, will be readily apparent as the present invention becomes better understood by reference to the following detailed description when considered in conjunction with the accompanying drawings,
wherein:
FIG. 1 is a network diagram of a network according to the first aspect of the invention;
FIG. 2 illustrates a 1:1 linkage from two BRAS' to a single Access Node; and
FIG. 3 illustrates a 1:N linkage from a BRAS to two Access Nodes.

### Detailed Description of the Invention

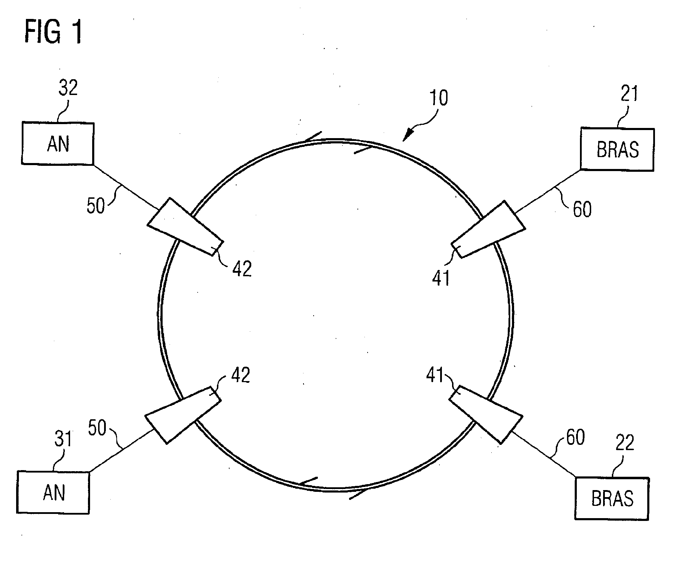

FIG. 1 shows a network diagram of a network according to the first aspect of the invention. The network comprises a Wave Division Multiplex (WDM) network 10 having a ring structure. In the example of Fig. 1 the WDM network 10 comprises two fibres which may be used to transport data in opposing directions as indicated by the attached arrow heads on the top and bottom of the WDM network 10. The WDM network comprises Optical Add/Drop Multiplexers (OADMs) 41 and 42
wherein the OADMs 41 are each connected to one of Broadband Remote Access Servers (BRAS) 21, 22 via dedicated downlinks 60. The remaining OADMs 42 are each connected to corresponding Access Nodes (AN) 31, 32 via dedicated uplinks 50. In the scope of this document, the terms "uplink" and "downlink" do not imply a preferred direction of data transmission. Since these terms are commonly used relative to a chosen standpoint on the network and are void of a meaning without specification of the standpoint, they have been chosen to simply differentiate between a data link between the WDM network 10 and an Access Node 31, 32 (uplink) on the one hand and a data link between the WDM network 10 and a BRAS 21, 22 (downlink) on the other hand.

Each Access Node 31, 32 is connected to a corresponding plurality of subscriber lines which are not shown. These subscriber lines may be Ethernet Passive Optical Networks (EPON) or other types of network connections. Preferably, the dedicated uplinks 50 and downlinks 60 are realised using Gigabit-Ethernet links.

The OADMs 41 are adapted to receive data from the corresponding downlink 60 and to add the received data to the WDM network 10 on a transmission wavelength uniquely assigned to the specific OADM. Thus, the WDM network 10 is adapted to transport data on a number of transmission wavelengths at least equal to the number of OADMs 41 present in the WDM network 10. In this way, each data service provided by a BRAS 21, 22 present in the network is assigned its specific transmission wavelength. If a relatively small number of OADMs 41 is present in the network, coarse WDM which typically provides between 10 and 20 transmission wavelengths may suffice. For larger networks with a high number of data services and accordingly a high number of BRAS 21, 22 and OADMS 41, dense WDM which may provide up to hundreds of transmission wavelengths may be used.

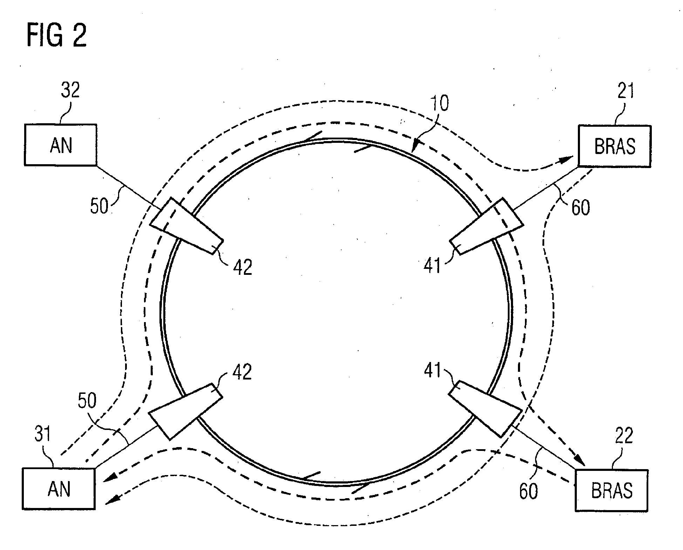

FIG. 2 gives an example for a 1:1 linkage from two BRAS' to a single Access Node in the network of FIG. 1. Each BRAS 21, 22 provides a data service via the network, The direction of data flow is illustrated by dashed and dotted arrows for each respective data service. Data of the first data service provided by BRAS 21 (dotted arrows) arrives at a first one of OADMs 41 and is added to the WDM network 10 on a first transmission wavelength. The OADM 42 connected to Access Node 31 is setup to drop data transported on the first transmission wavelength from the WDM network 10 to the Access Node 31 via the corresponding dedicated uplink 50. The Access Node 31 demultiplexes the data stream received via the dedicated uplink 50 and distributes the data among the attached subscriber lines (in some services, no demultiplexing or routing may be required; then, all data is sent down all subscriber lines). Upstream data reaching the Access Node 31 from the subscriber lines will be sent to the corresponding OADM 42 via the dedicated uplink 50. The upstream data is added to the WDM network 10 on the assigned transmission wavelength. In an embodiment of the invention, the upstream data may also be sent on a second transmission wavelength uniquely assigned to the upstream data of a specific data service. The upstream data reaches the OADM 41 connected to BRAS 21 where it is dropped from the WDM network 10 and sent to BRAS 21. In the same way, a second data service provided by BRAS 22 is transmitted to Access Node 31 over the WDM network 10 on a different (uniquely assigned) transmission wavelength. Thus, the first and second data services do not interfere with each other because they are carried on different wavelengths. This removes the need for packet based routing between the BRAS 21, 22 and an addressed Access Node 31, 32 on the network and reduces network latency and circuit complexity in the involved hardware because connecting can be carried out on the so-called lambda-layer by setting up OADMs 41, 42 to add/drop data streams carried on specific transmission wavelengths without inspection of the respective data streams.

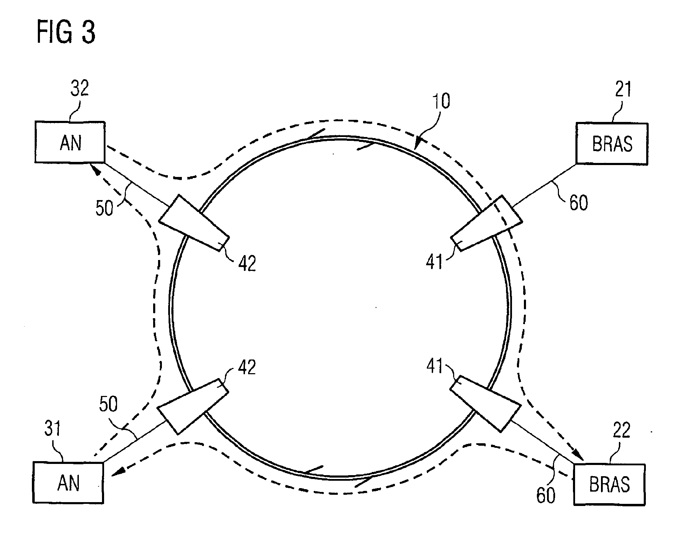

FIG. 3 illustrates a 1:N linkage from a BRAS to two Access Nodes. The network depicted in FIG. 3 is similar to that of FIGS. 1 and 2. For the sake of simplicity, data flow of only one data service is illustrated in FIG. 3. The data service is provided by BRAS 22 and enters the WDM network 10 at the OADM 41 connected to BRAS 22. Here, the Access Nodes 31, 32 are set up to carry out demultiplexing and routing because packets not addressed to a receiving Access Node 31 will have to be sent back to the WDM network 10 such that it may reach a second Access Node 32 present in the network. Consequently, the data packets not addressed to Access Node 31 are added to the upstream data emerging from Access Node 31 and sent to the connected OADM 42. The OADM 42 adds the upstream data and the data packets to the WDM network 10 on the transmission wavelength associated with the data service. The OADM 42 connected to Access Node 32 again drops the data stream on the transmission wavelength and sends it down via the corresponding dedicated uplink 50. Access Node 32 sends upstream data back to BRAS 22 as explained before. Using 1:N linkage as described above, a plurality of Access Nodes may be provided with a specific data service over the network of the first aspect of the invention without the need of packet-based routing before the data stream arrives at an addressed Access Node 31, 32.

## Claims

1. A data network comprising:
a Wave Division Multiplex (WDM) network (10) having a ring or a mesh structure and comprising a first and a second plurality of Optical Add/Drop Multiplexers (OADM) (41, 42), the WDM network (10) being adapted to transport data on a plurality of transmission wavelengths;
a plurality of Broadband Remote Access Servers (BRAS) (21, 22), each of which being connected to a corresponding one of the first plurality of OADMs (41, 42) via a corresponding one of a plurality of dedicated downlinks; and
a plurality of Access Nodes (AN) (31, 32), each of which being connected to a corresponding one of the second plurality of OADMs (41, 42) via a corresponding one of a plurality of dedicated uplinks and each of which being connected to a corresponding plurality of subscriber lines;
wherein each of the first plurality of OADMs (41, 42) is adapted to add data to the WDM network (10) on a transmission wavelength uniquely assigned to the respective OADM.

2. The network according to claim 1, wherein a first OADM of the first plurality of OADMs (41, 42) is adapted to drop data from the WDM network (10) on the transmission wavelength uniquely assigned to the first OADM.

3. The network according to claim 2, wherein each of the first plurality of OADMs (41, 42) is adapted to drop data from the WDM network (10) on the transmission wavelength uniquely assigned to the respective OADM.

4. The network according to one of the previous claims,
wherein the WDM network (10) comprises two fibres wherein data is transported in opposing directions.

5. The network according to one of the previous claims,
wherein a first dedicated downlink is a Gigabit-Ethernet link.

6. The network according to one of the previous claims,
wherein a first dedicated uplink is a Gigabit-Ethernet link.

7. A method of distributing data services over a network comprising:
providing a plurality of data services from a plurality of BRAS' (21, 22) to a plurality of Access Nodes, each BRAS (21, 22) being connected to a WDM network (10) via a corresponding one of a plurality of dedicated downlinks and each Access Node being connected to the WDM network (10) via a corresponding one of a plurality of dedicated uplinks and to a corresponding plurality of subscriber lines; and
adding each data service to the WDM network (10) via a corresponding one of a first plurality of OADMs (41, 42);
wherein each of the plurality of data services is uniquely assigned one of a plurality of transmission wavelengths of the WDM network (10).

8. The method of claim 7, further comprising dropping one of the data services at one OADM of a second plurality of OADMs (41, 42).
